(19) **Europäisches Patentamt / European Patent Office / Office européen des brevets**

(11) **EP 4 335 079 B1**

(12) **FASCICULE DE BREVET EUROPEEN**

(45) Date de publication et mention de la délivrance du brevet:
**18.03.2026 Bulletin 2026/12**

(21) Numéro de dépôt: **22718743.2**

(22) Date de dépôt: **31.03.2022**

(51) Classification Internationale des Brevets (IPC):
**H04L 9/40** *(2022.01)* **B60R 16/023** *(2006.01)*
**H04L 12/40** *(2006.01)*

(52) Classification Coopérative des Brevets (CPC):
**H04L 63/1408; H04L 12/40104**

(86) Numéro de dépôt international:
**PCT/FR2022/050610**

(87) Numéro de publication internationale:
**WO 2022/234199 (10.11.2022 Gazette 2022/45)**

(54) **PROCÉDÉ ET DISPOSITIF DE PROTECTION CONTRE UNE INTRUSION SUR UN BUS DE DONNÉES D'UN VÉHICULE**

VERFAHREN UND VORRICHTUNG ZUM SCHUTZ VOR EINEM EINDRINGEN AUF EINEN DATENBUS EINES FAHRZEUGS

METHOD AND DEVICE FOR PROTECTING AGAINST AN INTRUSION ON A DATA BUS OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2021 FR 2104785**

(43) Date de publication de la demande:
**13.03.2024 Bulletin 2024/11**

(73) Titulaire: **Stellantis Auto SAS**
**78300 Poissy (FR)**

(72) Inventeurs:
- **HARRAR, Ahmed**
  **95100 Argenteuil (FR)**
- **GONCALVES, Doarte**
  **92500 Rueil Malmaison (FR)**
- **CAKMAK, Ahmet**
  **78190 Trappes (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**EP-A1- 3 726 796       FR-A1- 3 102 269**
**US-A1- 2014 346 284**

## Description

La présente invention revendique la priorité de la demande française 2104785 déposée le 06.05.2021 dont le contenu (texte, dessins et revendications).

## Domaine technique

L'invention concerne les procédés et dispositifs de protection contre les intrusions sur un bus de données d'un véhicule, notamment de type automobile. L'invention concerne également un procédé et un dispositif de détection d'un ou plusieurs messages émis par un dispositif malveillant sur un bus de données d'un véhicule.

## Arrière-plan technologique

Les véhicules contemporains embarquent nombre de calculateurs assurant chacun une ou plusieurs fonctions, telles que par exemple la gestion de l'aide à la conduite, de l'antipatinage, de la répartition électronique du freinage ou encore la commande d'actionneurs pour assurer le fonctionnement optimal d'un moteur à combustion. Ces calculateurs sont reliés entre eux via un bus de données multiplexé de type CAN (de l'anglais « Controller Area Network » ou en français « Réseau de contrôleurs ») ou CAN FD (de l'anglais « Controller Area Network Flexible Data-Rate » ou en français « Réseau de contrôleurs à débit de données flexible »), l'ensemble bus de données et calculateurs formant le système embarqué du véhicule. Ces calculateurs sont aussi appelés UCE (« Unité de Commande Electronique » ou en anglais ECU « Electronic Control Unit »). Ces calculateurs embarquent des logiciels qui sont exécutés pour assurer les fonctions dont ils ont la charge.

L'émission de messages malveillants par un dispositif tel qu'un boîtier électronique ou par un logiciel de type malware introduit dans un des calculateurs du système embarqué est utilisé pour pirater ou perturber les échanges de données entre les calculateurs du système embarqué. Ce ou ces messages malveillants sont potentiellement dangereux pour la sécurité du véhicule, l'introduction de tels messages malveillants pouvant générer des dysfonctionnements des calculateurs exploitant les données contenues dans ces messages. FR 3 102 269 A1, EP 3 726 796 A1 et US 2014/346284 A1 ont été employés à l'établissement du rapport de recherche européenne et à l'examen de la demande de brevet européen.

## Résumé de la présente invention

Un objet de la présente invention est de résoudre au moins un des problèmes de l'arrière-plan technologique, par exemple d'améliorer la protection contre l'introduction de messages malveillants sur un bus de données d'un véhicule, par exemple automobile et/ou d'améliorer la détection d'intrusion de message malveillant sur un bus de données d'un véhicule.

Un autre objet de l'invention est d'améliorer la sécurité des échanges de données entre calculateurs reliés par un bus de données d'un véhicule.

Selon un premier aspect, la présente invention concerne un procédé de protection contre une intrusion sur un bus de données d'un véhicule, le procédé comprenant les étapes suivantes :

- détection d'une intrusion d'un premier message transmis sur le bus de données, le premier message appartenant à un ensemble de messages transmis sur le bus de données, l'intrusion étant détectée en fonction d'une valeur d'un compteur associé au premier message et en fonction de règles déterminées d'incrémentation du compteur pour chaque transmission d'un message de l'ensemble de messages sur le bus de données ;
- transmission, sur le bus de données, d'une requête de filtrage du premier message, la requête comprenant au moins une valeur représentative d'un identifiant du premier message, la requête étant comprise dans un message, dit périodique, appartenant à un ensemble de messages transmis périodiquement sur le bus de données.

Selon une variante, le procédé comprend en outre une étape de stockage de l'identifiant dans une mémoire de type « premier entré, premier sorti », dite mémoire FIFO, configurée pour stocker un nombre déterminé d'identifiants, un message périodique étant transmis pour chaque identifiant stocké dans la mémoire FIFO, les messages périodiques étants transmis séquentiellement selon un ordre de stockage des identifiants associés dans la mémoire FIFO.

Selon une autre variante, la requête comprend une première valeur représentative de l'identifiant du premier message et une deuxième valeur représentative de l'identifiant du premier message, la première valeur étant obtenue par un produit de l'identifiant par une première matrice déterminée et la deuxième valeur étant obtenue par un produit de l'identifiant par une deuxième matrice déterminée, la deuxième matrice étant différente de la première matrice.

Selon une variante supplémentaire, un calculateur destinataire de la requête de filtrage comprend en mémoire une troisième matrice inverse de la première matrice et une quatrième matrice inverse de la deuxième matrice, la première matrice comprenant au moins une valeur non présente dans la troisième matrice et/ou la deuxième matrice comprenant au moins une valeur non présente dans la quatrième matrice.

Selon encore une variante, une troisième valeur est obtenue par un produit de la première valeur par la troisième matrice et une quatrième valeur est obtenue par un produit de la deuxième valeur par la quatrième valeur, le calculateur destinataire de la requête de filtrage exécutant le filtrage du premier message lorsque la troisième valeur est égale à la quatrième valeur.

Selon une variante additionnelle, le filtrage du premier message par le calculateur déclenche un fonctionnement en mode dégradé du calculateur vis-à-vis d'au moins une fonction associée au premier message.

Selon un deuxième aspect, la présente invention concerne un dispositif de protection contre une intrusion sur un bus de données d'un véhicule, le dispositif comprenant une mémoire associée à un processeur configuré pour la mise en œuvre d'au moins une partie des étapes du procédé selon le premier aspect de la présente invention.

Selon un troisième aspect, la présente invention concerne un système comprenant un dispositif tel que décrit ci-dessus selon le deuxième aspect de la présente invention et au moins un calculateur relié au dispositif tel que décrit ci-dessus selon le deuxième aspect de la présente invention via un bus de données, le système étant configuré pour la mise en œuvre des étapes du procédé selon le premier aspect de la présente invention.

Selon un quatrième aspect, la présente invention concerne un véhicule, par exemple de type automobile, comprenant un dispositif tel que décrit ci-dessus selon le deuxième aspect de la présente invention ou un système tel que décrit ci-dessus selon le troisième aspect de la présente invention.

Selon un cinquième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de la présente invention ressortiront de la description des exemples de réalisation particuliers et non limitatifs de la présente invention ci-après, en référence aux figures 1 à 7 annexées, sur lesquelles :

[Fig. 1] illustre de façon schématique un bus de données d'un véhicule, selon un exemple de réalisation particulier de la présente invention ;

[Fig. 2] illustre schématiquement la mise en mémoire d'un identifiant d'un premier message transmis sur le bus de données de la figure 1, selon un exemple de réalisation particulier et non limitatif de la présente invention ;

[Fig. 3] illustre schématiquement la transmission de messages comprenant l'identifiant du premier message mis dans la mémoire de la figure 2, selon un exemple de réalisation particulier et non limitatif de la présente invention ;

[Fig. 4] illustre schématiquement le chiffrement d'un identifiant d'un premier message transmis sur le bus de données de la figure 1, selon un exemple de réalisation particulier et non limitatif de la présente invention ;

[Fig. 5] illustre schématiquement le déchiffrement de l'identifiant du premier message transmis sur le bus de données de la figure 1, selon un exemple de réalisation particulier et non limitatif de la présente invention ;

[Fig. 6] illustre schématiquement un dispositif configuré pour protéger contre une intrusion sur le bus de données de la figure 1, selon un exemple de réalisation particulier et non limitatif de la présente invention ;

[Fig. 7] illustre un organigramme des différentes étapes d'un procédé de protection contre une intrusion sur le bus de données de la figure 1, selon un exemple de réalisation particulier et non limitatif de la présente invention.

**Description des exemples de réalisation**

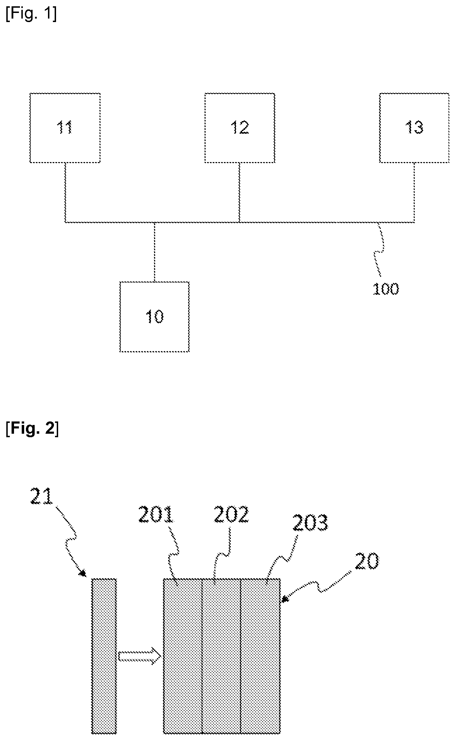

Un procédé et un dispositif de protection contre une intrusion sur un bus de données d'un véhicule vont maintenant être décrits dans ce qui va suivre en référence conjointement aux figures 1 à 7. Des mêmes éléments sont identifiés avec des mêmes signes de référence tout au long de la description qui va suivre.

Selon un exemple particulier et non limitatif de réalisation de la présente invention, une intrusion sur un bus de données d'un véhicule est détectée par un dispositif relié au bus de données. Le bus de données est par exemple de type CAN (de l'anglais « Controller Area Network » ou en français « Réseau de contrôleurs ») ou CAN FD (de l'anglais « Controller Area Network Flexible Data-Rate » ou en français « Réseau de contrôleurs à débit de données flexible »). Une intrusion est détecté en contrôlant la valeur d'un compteur associé à chaque message transmis sur le bus de données, l'incrémentation du compteur suivant des règles spécifiques. Si un compteur associé à un premier message transmis n'a pas la valeur attendue, une intrusion associée à la transmission de ce premier message est détectée. Une requête de filtrage est alors transmise par le dispositif sur le bus de données pour requérir d'un ou plusieurs calculateurs reliés au bus de données qu'ils filtrent le premier message. Une telle requête est avantageusement transmise dans un message émis périodiquement sur le bus de données, la requête comprenant une ou plusieurs valeurs représentatives de l'identifiant du premier message.

La transmission d'une requête de filtrage lorsqu'une intrusion est détectée permet de protéger les calculateurs du bus de données en requérant que ces derniers filtrent un message considéré et détecté comme étant malveillant, un message malveillant correspondant à un message introduit sur le bus de données par un dispositif non-autorisé ou malveillant.

La figure 1 illustre schématiquement un bus de données 100 d'un véhicule, selon un exemple de réalisation particulier et non limitatif de la présente invention.

Le bus de données 100 correspond avantageusement à un bus de données de type multiplexé reliant plusieurs calculateurs 11, 12 et 13. Un dispositif 10 configuré pour détecter une ou plusieurs intrusions sur le bus de données 100 est également relié aux calculateur 11 à 13 via le bus de données 100. Le dispositif 10 correspond par exemple à un système de détection d'intrusion, dit dispositif ou module IDS (de l'anglais « Intrusion Detection System ») et/ou à un système de protection contre les intrusions, dit dispositif ou module IPS (de l'anglais « Intrusion Protection System »). Un tel module IDS / IPS correspond par exemple à un dispositif configuré pour recevoir et traiter des données et est par exemple hébergé dans un calculateur sous la forme d'un module logiciel. Un tel module IDS / IPS est avantageusement hébergé dans un environnement ou une zone sécurisée (de l'anglais « Trusted zone ») d'un calculateur pour le protéger d'une éventuelle attaque.

L'ensemble formé par le bus de données 100, les calculateurs 11 à 13 et le dispositif 10 forment tout ou partie d'un système embarqué du véhicule, par exemple un véhicule automobile. Le nombre de calculateurs 11 à 13 n'est cependant pas limité à 3 et s'étend à tout nombre, par exemple 2, 5, 10, 100 ou plus de calculateurs.

Le système embarqué comprend par exemple également une unité de contrôle télématique, dite TCU (de l'anglais « Telematic Control Unit »), reliée en communication avec les calculateurs 11 à 13 via le bus de données 100. La TCU est reliée à une ou plusieurs antennes du véhicule pour la communication de données entre le véhicule et un ou plusieurs dispositifs distants, par exemple via une liaison sans fil basée sur un réseau cellulaire de type LTE (de l'anglais « Long-Term Evolution » ou en français « Evolution à long terme »), LTE-Advanced (ou en français LTE-avancé), aussi appelé réseau 4G ou 5G.

Le bus de données est par exemple de type CAN tel que défini dans la norme ISO 11898 ou de type CAN FD tel que défini dans la norme ISO 11898-1. Le bus de données 100 met avantageusement en œuvre un multiplexage temporel permettant aux calculateurs 11 à 13 d'émettre des messages (aussi appelés trames de données).

Selon une variante de réalisation, le bus de données 100 correspond par exemple à un bus de type FlexRay (selon la norme ISO 17458) ou Ethernet (selon la norme ISO/IEC 802-3).

Les messages émis sur le bus de données 100 peuvent être de plusieurs types en fonctions des données qu'ils transportent, chaque type de message étant identifié par un identifiant déterminé et particulier. Un compteur est compris dans les messages, ou pour le moins pour les messages d'un ou plusieurs types déterminés. Un compteur est alors associé à un premier type de message donné identifié via un identifiant unique, c'est-à-dire que la valeur du compteur associé à ce premier type de messages ne s'incrémente que lorsqu'un message de ce premier type est transmis avec succès sur le bus de données, par exemple par un calculateur particulier de ce bus de données. Si un compteur est compris dans des messages d'un deuxième type différent du premier type, alors le compteur de ces messages du deuxième type ne s'incrémente que lorsqu'un message du deuxième type est transmis avec succès sur le bus de données 100. Le compteur des messages du premier type et le compteur des messages du deuxième type sont donc indépendants l'un vis-à-vis de l'autre, notamment au regard de l'incrémentation de ces compteurs.

Les messages transmis sur le bus de données 100 correspondent par exemple à des messages périodiques, ces messages périodiques comprenant un compteur et étant d'un type déterminé identifié par un identifiant déterminé et unique. Les messages sont dits périodiques en ce qu'ils sont transmis à intervalle régulier (une période), par exemple par le calculateur 11, par exemple toutes les 10, 20, 30 ms.

Selon un autre exemple, les messages transmis sur le bus de données 100 correspondent à des messages évènementiels, ces messages évènementiels comprenant un compteur et étant d'un type déterminé identifié par un identifiant déterminé et unique. Les messages sont dits évènementiels en ce qu'ils sont transmis lorsqu'un évènement est détecté au niveau d'un calculateur, par exemple le calculateur 11, ou d'un capteur associé à un calculateur par exemple. Les messages évènementiels sont transmis à intervalles irréguliers qui dépendent de la survenue des évènements à signaler via ces messages. Par exemple, deux messages évènementiels consécutifs peuvent être transmis avec un intervalle temporel de 30 ms et les deux messages évènementiels consécutifs suivants peuvent être transmis sur le bus de données avec un intervalle temporel entre ces messages égal à 10 minutes. Un évènement correspond par exemple à une alerte, par exemple associée à un dépassement de seuil (vitesse de rotation de l'arbre moteur supérieure à un seuil, température moteur supérieure à un seuil, ...).

Un processus de protection d'un bus de données d'un véhicule contre une ou plusieurs intrusions est avantageusement mis en œuvre par un dispositif, par exemple par le dispositif 10, par exemple par un ou plusieurs processeurs du dispositif 10. Selon une variante de réalisation, le processus est mis en œuvre par un système comprenant le dispositif 10 et un ou plusieurs calculateurs reliés au dispositif 10 via un bus de données, par exemple le bus de données 100.

Dans une première opération, une intrusion associée à la transmission d'un premier message sur le bus de données 100 est détectée. Le premier message appartient par exemple à un ensemble de messages transmis sur le bus de données, chaque message de cet ensemble étant par exemple du même type, par exemple périodique ou évènementiel. L'intrusion est avantageusement détectée en fonction de la valeur prise par un compteur associé au premier message, ce compteur s'incrémentant en fonction de règles déterminées pour chaque transmission d'un message de l'ensemble de messages sur le bus de données. Si la valeur prise par le compteur du premier message ne suit pas une ou plusieurs des règles déterminées, alors une intrusion est détectée.

La détection d'une intrusion basée sur un compteur est par exemple décrite dans le document de brevet FR1911601 publié le 23 avril 2021 ou dans le document de brevet FR1911602 publié le 23 avril 2021.

Chacun de ces documents décrit une méthode et un dispositif de détection d'intrusion sur un bus de données d'un véhicule.

Ainsi, un processus de détection d'une intrusion comprend la détermination d'une valeur prise par un compteur de chaque message d'un ensemble de messages périodiques (respectivement évènementiels) transmis sur le bus de données par un calculateur. Les messages périodiques (respectivement évènementiels) sont avantageusement identifiés via un même identifiant, la valeur du compteur étant incrémentée de 1 à chaque transmission réussie d'un message ayant le même identifiant. Le compteur prend avantageusement une première valeur déterminée pour un premier message indiquant un début d'initialisation du compteur et le compteur prend avantageusement une deuxième valeur déterminée pour un deuxième message indiquant la fin de l'initialisation du compteur. Concernant les messages périodiques, une durée d'initialisation du compteur est avantageusement supérieure à la période des messages périodiques. Une intrusion sur le bus de données est finalement détectée en surveillant la ou les valeurs prises par le compteur compris dans les messages transmis sur le bus de données, connaissant la durée d'initialisation du compteur.

Le compteur utilise par exemple 1 octet (c'est-à-dire 8 bits) de chaque message périodique. Le compteur peut ainsi prendre 255 valeurs, codées de 0 à 255 (ou de manière équivalente de 00 à FF en notation hexadécimale). Bien entendu, le compteur peut utiliser un nombre de bits différents, par exemple 10 bits ce qui permettrait au compteur de prendre 1024 valeurs. Les règles d'incrémentations du compteur associé aux messages identifiés par l'identifiant déterminé et unique comprennent les règles suivantes :

- la valeur du compteur s'incrémente de 1 à chaque transmission réussie d'un message du type déterminé sur le bus de données 100 ;
- en début d'initialisation du compteur (par exemple déclenchée par l'initialisation du calculateur émettant les messages, par exemple le calculateur 11), le calculateur 11 transmet un premier message comprenant une valeur de compteur égale à une première valeur déterminée, par exemple FE ; la transmission de ce message détermine le début de la phase d'initialisation du compteur ;
- pendant la phase d'initialisation du compteur, le calculateur 11 peut éventuellement transmettre un ou plusieurs premiers messages comprenant chacun une valeur de compteur égale à la première valeur déterminée, par exemple FE ;
- en fin d'initialisation du compteur (la durée d'initialisation étant déterminée et connu du calculateur 11 et du dispositif 10), le calculateur 11 transmet un deuxième message comprenant une valeur de compteur égale à une deuxième valeur déterminée, par exemple FF.

La durée d'initialisation du compteur est avantageusement supérieure à la période des messages périodiques qui comprennent ce compteur, c'est-à-dire que la durée d'initialisation est supérieure à l'intervalle temporel compris entre la transmission de 2 messages périodiques identifiés par le même identifiant. Cette durée d'initialisation est avantageusement inférieure à 254 fois la période (selon l'exemple dans lequel le compteur est codé sur 8 bits).

Une intrusion est détectée par le dispositif 10 dans un ou plusieurs des cas suivants :

- lorsque, hors période d'initialisation du compteur détectée par la réception d'un premier message avec une valeur de compteur égale à la première valeur par exemple FE, la différence de la valeur prise par le compteur de 2 messages reçus successivement est différente de 1 ;
- lorsque la durée temporelle entre la réception d'un premier message ayant une valeur de compteur égale à la première valeur (par exemple FE) et la réception d'un deuxième message ayant une valeur de compteur égale à la deuxième valeur (par exemple FF) est inférieure à la durée d'initialisation du compteur ;
- lorsque la valeur du compteur d'un message reçu immédiatement après la réception d'un deuxième message ayant une valeur de compteur égale à la deuxième valeur (par exemple FF) est différente de la première valeur (par exemple FE) et d'une troisième valeur correspond à la valeur prise par le compteur lorsqu'il commence la série d'incrémentation (par exemple 00).

A contrario, aucune intrusion n'est détectée par le dispositif 10 dans un ou plusieurs des cas suivants :

- lorsque la différence de la valeur prise par le compteur de 2 messages reçus successivement est égale à 1 ;
- lorsque plusieurs messages reçus successivement ont un compteur ayant pour valeur la première valeur (par exemple FE), correspondant par exemple à plusieurs initialisations successives du compteur.

A titre d'exemple, les séquences de valeurs prises par le compteur suivantes ne génèrent pas de détection d'intrusion :

- FE ... FE FF 00 : plusieurs initialisations suivies d'une fin d'initialisation (la durée entre la fin d'initialisation FF et le dernier début d'initialisation FE étant inférieure à la durée d'initialisation) et d'une nouvelle série d'incrémentations du compteur commençant par 00 ;
- FE ... FE FF FE ... FE FF 00 : correspondant au cas où une initialisation du compteur est effectuée juste après une fin d'initialisation marquée par FF, en respectant pour chaque séquence une durée entre la fin d'initialisation FF et le dernier début d'initialisation FE étant inférieure à la durée d'initialisation ;
- XX FE ... FE FF 00, où XX correspond à une valeur quelconque différente de FE ou FF, correspondant à une initialisation du compteur après un message comprenant un compteur à 'XX'.

Un tel processus permet ainsi au dispositif IDS / IPS 10 de détecter une intrusion malveillante d'un premier message copiant un message transmis précédemment par un calculateur, par exemple le calculateur 11, et comprenant en plus des données dangereuses pour un ou plusieurs des calculateurs 11 à 13 et le système embarqué du véhicule. Le dispositif malveillant ne connaissant par les règles d'incrémentation du compteur, celui-ci ne peut pas générer de message conforme aux règles décrites ci-dessus.

Le premier message est par exemple identifié par un identifiant, codé par exemple sur 11 bits.

Dans une deuxième opération, lorsqu'un premier message est détecté comme correspondant à une intrusion malveillante ou non-autorisée sur le bus de données 100, l'identifiant du premier message est enregistré dans une mémoire du dispositif 10. Une telle mémoire correspond par exemple à une mémoire séquentielle, par exemple de type « premier entré, premier sorti », dénommée mémoire FIFO (de l'anglais « First In, First Out »).

Un tel enregistrement est illustré par la figure 2 qui représente schématiquement la mise en mémoire de l'identifiant du premier message, selon un exemple de réalisation particulier et non limitatif de la présente invention.

La mémoire FIFO 20 correspond à un registre à décalage de taille fixe ou variable. La mémoire FIFO 20 comprend par exemple un nombre déterminé de registres 201, 202, 203 configurés pour chacun stocker un mot d'un nombre de bits déterminés, un mot correspondant par exemple à un identifiant d'un premier message détecté comme correspondant à une intrusion non autorisée. La mémoire FIFO 20 est par exemple configurée pour stocker 3 mots ou identifiants 201, 202, 203. Lorsqu'un premier message est détecté comme correspondant à une intrusion non autorisée, son identifiant 21 est stockée dans le registre 201, celui précédemment stocké dans le registre 201 passe dans le registre 202, celui précédemment stocké dans le registre 202 passe dans le registre 203 et celui précédemment stocké dans le registre 203 sort de la mémoire FIFO 20 et n'est plus enregistré en mémoire 20.

La mémoire FIFO 20 est avantageusement remise à zéro, c'est-à-dire vidée, lors du redémarrage du véhicule.

Dans une troisième opération, une requête de filtrage du premier message est transmise par le dispositif IDS / IPS 10 sur le bus de données. La requête de filtrage est par exemple transmise à destination de l'ensemble des calculateurs 11 à 13 relié au bus de données ou à une partie de ces calculateurs 11 à 13. Une telle requête comprend avantageusement une ou plusieurs valeurs représentatives de l'identifiant 21 du premier message.

Une telle requête de filtrage est avantageusement transmise dans un message émis périodiquement sur le bus de données, par exemple toutes les 100 ms.

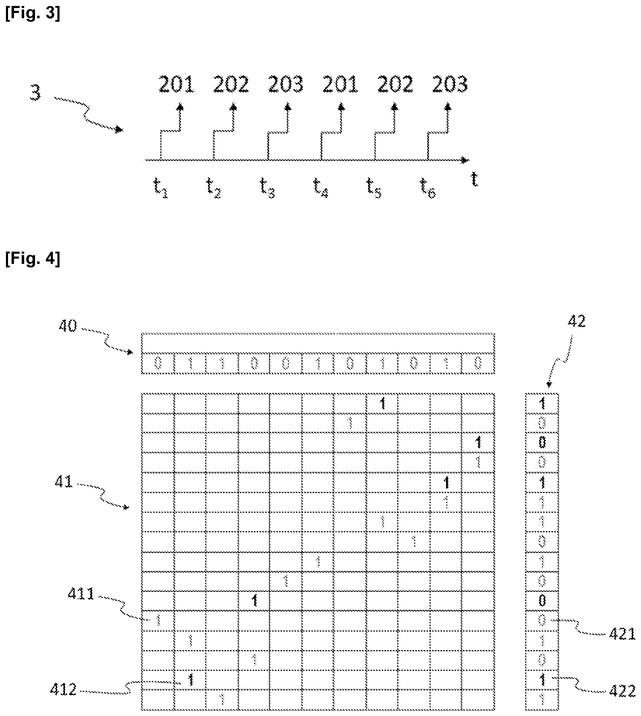

La figure 3 illustre schématiquement la transmission de messages périodiques comprenant chacun un identifiant d'un premier message détecté comme correspondant à une intrusion non autorisée sur le bus de données 100, selon un exemple de réalisation particulier et non limitatif de la présente invention.

La figure 3 illustre la transmission 3 d'un ensemble de messages périodiques en fonction du temps 't'. Chaque message transporte avantageusement un des identifiants stockés dans la mémoire FIFO 20. Par exemple, un premier message transportant une requête de filtrage du premier message identifié par l'identifiant stocké dans le registre 201 est transmis à l'instant 't1'. Ce premier message est suivi d'un deuxième message transportant une requête de filtrage du premier message identifié par l'identifiant stocké dans le registre 202 et est transmis à l'instant 't2'. Ce deuxième message est suivi d'un troisième message transportant une requête de filtrage du premier message identifié par l'identifiant stocké dans le registre 203 et est transmis à l'instant 't3'.

Les premier, deuxième et troisième messages sont dits périodiques en ce qu'ils sont transmis périodiquement, c'est-à-dire à intervalle régulier, l'intervalle temporel séparant l'émission de deux messages successifs étant constant et par exemple égal à 100 ms. Les requêtes de filtrage sont ainsi émises séquentiellement dans l'ordre de stockage dans la mémoire FIFO. La transmission des premier, deuxième et troisième messages est cyclique tel qu'illustré sur la figure 3, c'est-à-dire que les trois messages sont réémis dans un même ordre aux instants 't4', 't5' et 't6', tant que la mémoire FIFO 20 contient des identifiants de premier(s) message(s) détecté(s) comme correspondant à une intrusion.

Si la mémoire FIFO 20 ne contient aucun identifiant, c'est-à-dire si aucune intrusion n'a été détectée, aucun message périodique (et donc aucune requête de filtrage) n'est émis(e) sur le bus de données 100.

Pour réduire le risque d'attaque malveillante relative à la transmission de(s) requête(s) de filtrage(s) sur le bus de données, l'identifiant d'un premier message ciblé par une requête de filtrage et compris dans cette requête de filtrage est chiffré, selon une variante de réalisation.

Selon une telle variante de réalisation, une requête de filtrage contenue dans un message périodique comprend par exemple deux valeurs représentatives d'un même identifiant 21 d'un premier message. Une telle requête comprend ainsi une première valeur 'V1' représentative de l'identifiant 21, par exemple codée sur 16 bits, et une deuxième valeur 'V2' représentative du même identifiant 21, par exemple également codée sur 16 bits.

La première valeur 'V1' est par exemple obtenue (ou chiffrée ou codée) en réalisant le produit de l'identifiant 21 par une première matrice 'M1' déterminée.

La deuxième valeur 'V2' est également obtenue en réalisant le produit de l'identifiant 21 par une deuxième matrice 'M2' déterminée, la deuxième matrice étant différente de la première matrice pour que la première valeur 'V1' et la deuxième valeur 'V2' soient différentes.

La première valeur 'V1' et la deuxième valeur 'V2' sont ainsi obtenues à partir de l'identifiant 'ID' et de la première matrice 'M1' et de la deuxième matrice 'M2' comme suit :

$$V1 = ID * M1$$

$$V2 = ID * M2$$

Les dimensions de la première matrice 'M1' sont avantageusement identiques aux dimensions de la deuxième matrice 'M2', ces dimensions dépendant de la taille de l'identifiant.

Par exemple, si l'identifiant est codé sur 11 bits, les dimensions de la première matrice 'M1' et de la deuxième matrice 'M2' sont égales à 11x16.

Selon une variante de réalisation, une ou plusieurs valeurs de la première matrice 'M1' et/ou de la deuxième matrice 'M2' ne sont pas utilisées pour déchiffrer l'identifiant à partir de la première valeur 'V1' et de la deuxième valeur 'V2'. Une telle variante permet de complexifier le chiffrement / déchiffrement de l'identifiant.

La figure 4 illustre schématiquement le chiffrement de l'identifiant d'un premier message correspondant à une intrusion non autorisée sur le bus de données 100, selon un exemple de réalisation particulier et non limitatif de la présente invention.

La figure 4 représente un identifiant 40, correspondant par exemple à l'identifiant 21 de la figure 2, cet identifiant 40 étant codé sur 11 bits et prenant la valeur '01100101010'. Une première valeur 'V1' 42 représentative de cet identifiant 40 est obtenue en réalisant le produit de l'identifiant 40 par la matrice 'M1' 41.

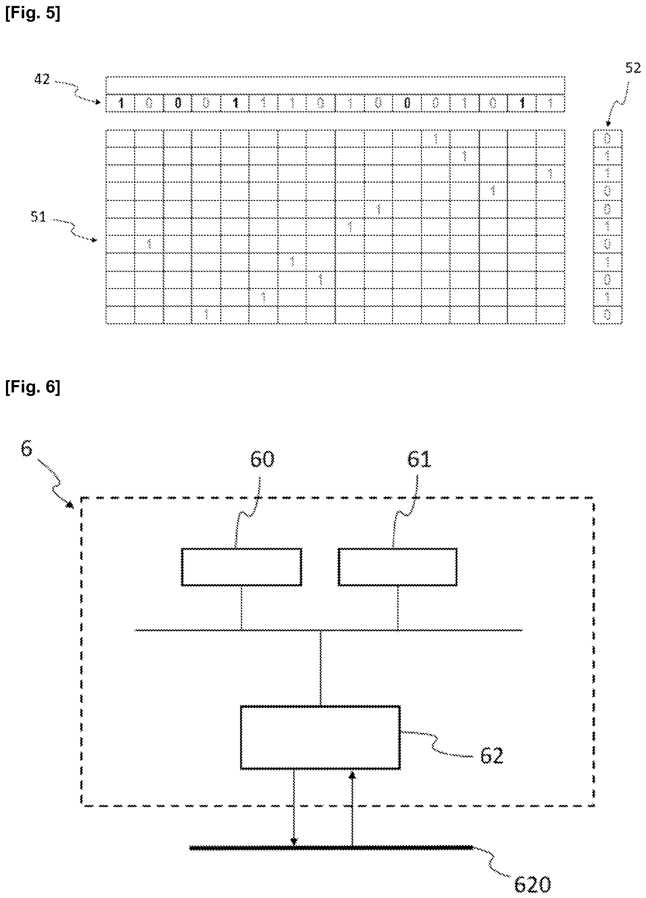

Selon l'exemple de la figure 4, certaines valeurs de la matrice 'M1' 41 représentées en noir et en gras, telle que la valeur référencée 412, correspondent à des valeurs de la matrice 'M1' 41 permettant d'obtenir des bits de la première valeur 'V1' également représentées en noir et en gras, telle que le bit 422, qui ne sont pas utilisée lors du déchiffrement pour obtenir l'identifiant, tel que sera illustré par la figure 5 ci-après.

Les valeurs et bits représentés en gris clair, tels que la valeur 411 et le bit 421, correspondent à contrario à des valeurs et bits que se retrouvent et sont utilisés pour le déchiffrement pour obtenir l'identifiant, tel que sera illustré par la figure 5 ci-après.

Un même traitement est appliqué à l'identifiant 40 pour obtenir la deuxième valeur 'V2' à partir d'une deuxième matrice 'M2' différente de la première matrice 'M1' 41.

Dans une quatrième opération, le ou les calculateurs 11 à 13 destinataires du ou des messages périodiques émis par le dispositif 10 sont reçus. Par exemple un message périodique comprenant une requête de filtrage d'un premier message détecté comme correspondant à une intrusion est reçu, cette requête comprenant une ou plusieurs valeurs représentatives de l'identifiant de ce premier message.

Chaque calculateur destinataire de la requête décode la ou les valeurs de l'identifiant du premier message, un tel identifiant étant par exemple enregistré en mémoire de chaque calculateur destinataire.

Lorsque le premier message est reçu par le ou les calculateurs 11 à 13, ce ou ces calculateurs identifient ce premier message comme correspondant à un message à filtrer, les données contenues dans ce premier message n'étant alors pas décodées ou interprétées et ce premier message n'étant pas pris en compte par le ou les calculateurs 11 à 13.

Lorsque l'identifiant du premier message est chiffré dans la requête, chaque calculateur 11 à 13 déchiffre cet identifiant en utilisant la matrice inverse de la matrice inverse utilisée pour chiffrer l'identifiant par le dispositif 10. Une telle matrice inverse est avantageusement stockée en mémoire de chaque calculateur 11 à 13.

Par exemple et selon une variante de réalisation, lorsque la requête comprend la première valeur 'V1' 42 représentative de l'identifiant et la deuxième valeur 'V2' représentative de l'identifiant, chaque calculateur détermine l'identifiant à partir de la matrice inverse 'M1$^{-1}$' (dite troisième matrice) de la matrice 'M1' et à partir de la matrice inverse 'M2$^{-1}$' (dite quatrième matrice) de la matrice 'M2', les troisième et quatrième matrices 'M1$^{-1}$' et 'M2$^{-1}$' étant stockées en mémoire de chaque calculateur 11 à 13.

Une valeur de l'identifiant 'ID$_1$' (dite troisième valeur) est obtenue en réalisant le produit de la première valeur 'V1' par la première matrice inverse 'M1$^{-1}$' et une valeur de l'identifiant 'ID$_2$' (dite quatrième valeur) est obtenue en réalisant le produit de la deuxième valeur 'V2' par la deuxième matrice inverse 'M2$^{-1}$', comme suit :

$$ID_1 = V1 * M1^{-1}$$

$$ID_2 = V2 * M1^{-2}$$

La figure 5 illustre schématiquement le déchiffrement de l'identifiant d'un premier message correspondant à une intrusion non autorisée sur le bus de données 100, selon un exemple de réalisation particulier et non limitatif de la présente invention.

La figure 5 représente un identifiant 'ID$_1$' 51, correspondant par exemple à l'identifiant 21 de la figure 2, cet identifiant 51 étant obtenue via le produit de la première valeur 'V1' 42 reçue dans la requête de filtrage par la matrice 'M1$^{-1}$' 51 correspondant à la matrice inverse de la matrice 'M1' 41 sans les valeurs ayant permis d'obtenir les bits non définis 422 (illustrés en noir et gras) de la première valeur 'V1' 42.

Comme illustré sur la figure 5, l'identifiant 'ID$_1$' 51 a comme valeur '01100101010' et correspond effectivement à l'identifiant 'ID' 40 du premier message.

Un même traitement est appliqué à la deuxième valeur 'V2' pour obtenir l'identifiant 'ID$_2$' à partir de la deuxième matrice inverse 'M2$^{-1}$' de la deuxième matrice 'M2'.

Lorsque la requête comprend plusieurs valeurs représentatives de l'identifiant, par exemple deux valeurs 'V1' et 'V2', les identifiants du premier message obtenus à partir de chacune de ces valeurs 'V1' et 'V2' sont comparés.

Lorsque le résultat de la comparaison indique que ces identifiants sont identiques (ID$_1$ = ID$_2$), alors chaque calculateur 11 à 13 exécute la requête de filtrage reçu et filtre le premier message (la requête de filtrage n'ayant pas été corrompue ou attaquée). Un filtrage correspond par exemple à une désactivation de la réception des premiers messages portant cet identifiant ID.

La réception des premiers messages portant cet identifiant ID ne sera reprise qu'après redémarrage de ce ou ces calculateurs 11 à 13 ayant exécuté la requête de filtrage.

Dans un tel cas de figure, la ou les fonctions associées à la réception d'un tel premier message par ce ou ces calculateurs 11 à 13 sont mises en œuvre en mode dégradé par ce ou ces calculateurs 11 à 13. Si une redondance est mise en œuvre dans l'émission des messages associés à ces fonctions, la ou les fonctions seront assurées par le ou les calculateurs 11 à 13 à réception du ou des messages redondants aux premiers messages identifiés comme correspondant à une intrusion détectée.

Au contraire, lorsque le résultat de la comparaison indique que ces identifiants ne sont pas identiques (ID$_1$ ≠ ID$_2$), alors les calculateurs 11 à 13 n'exécutent pas la requête de filtrage reçue. Dans ce cas de figure et selon une variante, un défaut associé à ce message périodique comprenant cette requête de filtrage est enregistré par chaque calculateur 11 à 13 et un message d'alerte est généré et transmis, par exemple à destination à un serveur d'un centre de sécurité (par exemple un SOC (de l'anglais « Security Operation Center » ou en français « Centre d'opération de sécurité ») du constructeur du véhicule) pour indiquer qu'une attaque est en cours sur la fonction de filtrage des messages non autorisés ou malveillants.

La figure 6 illustre schématiquement un dispositif 5 configuré pour protéger le bus de données 100 contre une intrusion, selon un exemple de réalisation particulier et non limitatif de la présente invention. Le dispositif 6 correspond par exemple au dispositif 10. Selon une variante, le dispositif 6 correspond à un calculateur, aussi appelé ECU, du bus de données 100.

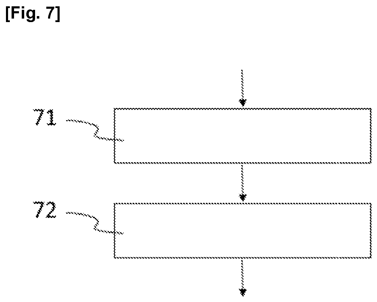

Le dispositif 6 est par exemple configuré pour la mise en œuvre des opérations décrites en regard des figures 1 à 5 et/ou des étapes du procédé décrit en regard de la figure 7. Les éléments du dispositif 6, individuellement ou en combinaison, peuvent être intégrés dans un unique circuit intégré, dans plusieurs circuits intégrés, et/ou dans des composants discrets. Le dispositif 6 peut être réalisé sous la forme de circuits électroniques ou de modules logiciels (ou informatiques) ou encore d'une combinaison de circuits électroniques et de modules logiciels. Selon différents modes de réalisation particuliers, le dispositif 6 est couplé en communication avec d'autres dispositifs ou systèmes similaires, par exemple par l'intermédiaire d'un bus de communication ou au travers de ports d'entrée / sortie dédiés.

Le dispositif 6 comprend un (ou plusieurs) processeur(s) 60 configurés pour exécuter des instructions pour la réalisation des étapes du procédé et/ou pour l'exécution des instructions du ou des logiciels embarqués dans le dispositif 6. Le processeur 60 peut inclure de la mémoire intégrée, une interface d'entrée/sortie, et différents circuits connus de l'homme du métier. Le dispositif 6 comprend en outre au moins une mémoire 61 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 61.

Selon un mode de réalisation particulier, le dispositif 6 comprend une interface de communication 62 qui permet d'établir une communication avec d'autres dispositifs (tels que les calculateurs du système embarqué et connectés au bus de données) via un canal de communication 620. L'interface de communication 62 correspond par exemple à un transmetteur configuré pour transmettre et recevoir des informations et/ou des données via le canal de communication 620. L'interface de communication 62 correspond par exemple à un réseau filaire de type CAN (de l'anglais « Controller Area Network » ou en français « Réseau de contrôleurs ») ou CAN FD (de l'anglais « Controller Area Network Flexible Data-Rate » ou en français « Réseau de contrôleurs à débit de données flexible »).

Selon un mode de réalisation particulier supplémentaire, le dispositif 6 peut fournir des signaux de sortie à un ou plusieurs dispositifs externes, tels qu'un écran d'affichage, un ou des haut-parleurs et/ou d'autres périphériques via respectivement des interfaces de sortie non représentées.

La figure 7 illustre un organigramme des différentes étapes d'un procédé de protection contre une intrusion sur un bus de données d'un véhicule, selon un exemple de réalisation particulier et non limitatif de la présente invention. Le procédé est par exemple mis en œuvre par un dispositif embarqué dans le véhicule, par exemple par le dispositif 10, ou par le dispositif 6 de la figure 6.

Dans une première étape 71, une intrusion d'un premier message transmis sur le bus de données est détectée, le premier message appartenant à un ensemble de messages transmis sur le bus de données. Cette intrusion est avantageusement détectée en fonction d'une valeur d'un compteur associé au premier message et en fonction de règles déterminées d'incrémentation du compteur pour chaque transmission d'un message de l'ensemble de messages sur le bus de données.

Dans une deuxième étape 72, une requête de filtrage du premier message est transmise sur le bus de données. La requête de filtrage comprend au moins une valeur représentative d'un identifiant du premier message, la requête étant comprise dans un message, dit périodique, appartenant à un ensemble de messages transmis périodiquement sur le bus de données.

Selon une variante, les variantes et exemples des opérations décrits en relation avec les figures 1 à 5 s'appliquent aux étapes du procédé de la figure 7.

Bien entendu, la présente invention ne se limite pas aux exemples de réalisation décrits ci-avant mais s'étend à un procédé de détection d'une intrusion sur un bus de données d'un véhicule qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 6 de la figure 6 ou un système comprenant le dispositif 10 relié à un ou plusieurs calculateurs 11 à 13 via le bus de données 100.

**Revendications**

1. Procédé de protection contre une intrusion sur un bus de données (100) d'un véhicule, ledit procédé comprenant une étape de détection (71) d'une intrusion d'un premier message transmis sur ledit bus de données (100), ledit premier message appartenant à un ensemble de messages transmis sur ledit bus de données (100), chacun de ces messages comprenant un identifiant, ladite intrusion étant détectée en fonction d'une valeur d'un compteur associé audit premier message et en fonction de règles déterminées d'incrémentation dudit compteur pour chaque transmission d'un message dudit ensemble de messages sur ledit bus de données (100) ;

   **caractérisé en ce que** ledit procédé comprend en outre une étape de transmission (72), sur ledit bus de données (100), d'une requête de filtrage dudit premier message pour désactiver une réception de messages portant l'identifiant dudit premier message, ladite requête de filtrage étant comprise dans un message, dit périodique, appartenant à un ensemble de messages transmis périodiquement sur ledit bus de données (100),

ladite requête de filtrage comprenant une première valeur (42) représentative de l'identifiant (40) dudit premier message et une deuxième valeur représentative de l'identifiant (40) dudit premier message, ladite première valeur (42) étant obtenue par un produit dudit identifiant (40) par une première matrice déterminée (41) et ladite deuxième valeur étant obtenue par un produit dudit identifiant (40) par une deuxième matrice déterminée, ladite deuxième matrice étant différente de ladite première matrice (41).

2. Procédé selon la revendication 1, comprenant en outre une étape de stockage dudit identifiant dans une mémoire de type « premier entré, premier sorti », dite mémoire FIFO (20), configurée pour stocker un nombre déterminé d'identifiants, un message périodique étant transmis pour chaque identifiant stocké dans ladite mémoire FIFO (20), lesdites messages périodiques étants transmis séquentiellement selon un ordre de stockage des identifiants associés dans ladite mémoire FIFO (20).

3. Procédé selon la revendication 1 ou 2, pour lequel un calculateur (11 à 13) destinataire de ladite requête de filtrage comprend en mémoire une troisième matrice (51) inverse de ladite première matrice (41) et une quatrième matrice inverse de ladite deuxième matrice, ladite première matrice (41) comprenant au moins une valeur non présente dans ladite troisième matrice (51) et/ou ladite deuxième matrice comprenant au moins une valeur non présente dans ladite quatrième matrice.

4. Procédé selon la revendication 3, pour lequel une troisième valeur (52) est obtenue par un produit de ladite première valeur (42) par ladite troisième matrice (51) et une quatrième valeur est obtenue par un produit de ladite deuxième valeur par ladite quatrième valeur, ledit calculateur destinataire de ladite requête exécutant le filtrage dudit premier message lorsque ladite troisième valeur est égale à ladite quatrième valeur.

5. Procédé selon la revendication 4, pour lequel ledit filtrage dudit premier message par ledit calculateur (11 à 13) déclenche un fonctionnement en mode dégradé dudit calculateur (11 à 13) vis-à-vis d'au moins une fonction associée audit premier message.

6. Programme d'ordinateur comportant des instructions pour la mise en œuvre du procédé selon l'une quelconque des revendications 1 à 2, lorsque ces instructions sont exécutées par un processeur.

7. Dispositif (6) de protection contre une intrusion sur un bus de données d'un véhicule, ledit dispositif (6) comprenant une mémoire (61) associée à au moins un processeur (60) configuré pour la mise en œuvre des étapes du procédé selon l'une quelconque des revendications 1 à 2.

8. Système comprenant le dispositif (6) selon la revendication 7 et au moins un calculateur (11 à 13) relié audit dispositif via un bus de données (100), ledit système étant configuré pour la mise en œuvre des étapes du procédé selon l'une quelconque des revendications 1 à 5.

9. Véhicule comprenant le dispositif (6) selon la revendication 7 ou le système selon la revendication 8.

**Patentansprüche**

1. Verfahren zum Schutz gegen das Eindringen in einen Datenbus (100) eines Fahrzeugs, wobei das Verfahren einen Schritt des Erfassens (71) eines Eindringens einer ersten Nachricht, die auf dem Datenbus (100) übertragen wird, umfasst, wobei die erste Nachricht zu einem Satz von Nachrichten gehört, die auf dem Datenbus (100) übertragen werden, wobei jede dieser Nachrichten eine Kennung umfasst, wobei das Eindringen in Abhängigkeit von einem Wert eines Zählers, der mit der ersten Nachricht verbunden ist, und in Abhängigkeit von bestimmten Inkrementierungsregeln des Zählers für jede Übertragung einer Nachricht des Satzes von Nachrichten auf dem Datenbus (100) erfasst wird ;

   **dadurch gekennzeichnet, dass** das Verfahren ferner einen Schritt des Sendens (72) einer Filteranforderung der ersten Nachricht auf dem Datenbus (100) umfasst, um einen Empfang von Nachrichten zu deaktivieren, die die Kennung der ersten Nachricht tragen, wobei die Filteranforderung in einer periodischen Nachricht enthalten ist, die zu einer Gruppe von Nachrichten gehört, die periodisch auf dem Datenbus (100) übertragen werden, wobei die Filteranforderung einen ersten Wert (42) umfasst, der die Kennung (40) der ersten Nachricht darstellt, und einen zweiten Wert, der die Kennung (40) der ersten Nachricht darstellt, wobei der erste Wert (42) durch ein Produkt des Identifizierers (40) durch eine erste bestimmte Matrix (41) erhalten wird und der zweite Wert durch ein Produkt des Identifizierers (40) durch eine zweite bestimmte Matrix erhalten wird, wobei die zweite Matrix sich von der ersten Matrix (41) unterscheidet.

2. Verfahren nach Anspruch 1, ferner mit einem Schritt des Speicherns der Kennung in einem FIFO-Speicher (20) vom Typ "first in first out", der so konfiguriert ist, dass er eine bestimmte Anzahl von Kennungen speichert, wobei für jede in dem FIFO-Speicher (20) gespeicherte Kennung eine periodische Nachricht übertragen wird, wobei die periodischen Nachrichten sequenziell in einer Reihenfolge übertragen werden, in der die zugehörigen Kennungen in dem FIFO-Speicher (20) gespeichert werden.

3. Verfahren nach Anspruch 1 oder 2, bei dem ein Rechner (11 bis 13), der die Filteranforderung empfängt, eine dritte Matrix (51), die zu der ersten Matrix (41) invers ist, und eine vierte Matrix, die zu der zweiten Matrix invers ist, im Speicher umfasst, wobei die erste Matrix (41) mindestens einen Wert umfasst, der in der dritten Matrix (51) nicht vorhanden ist, und/oder die zweite Matrix mindestens einen Wert umfasst, der in der vierten Matrix nicht vorhanden ist.

4. Verfahren nach Anspruch 3, bei dem ein dritter Wert (52) durch ein Produkt des ersten Wertes (42) durch die dritte Matrix (51) erhalten wird und ein vierter Wert durch ein Produkt des zweiten Wertes durch den vierten Wert erhalten wird, wobei der die Anforderung empfangende Rechner das Filtern der ersten Nachricht durchführt, wenn der dritte Wert gleich dem vierten Wert ist.

5. Verfahren nach Anspruch 4, bei dem das Filtern der ersten Nachricht durch den Rechner (11-13) einen Betrieb des Rechners (11-13) in einem verschlechterten Modus in Bezug auf mindestens eine Funktion auslöst, die der ersten Nachricht zugeordnet ist.

6. Computerprogramm mit Anweisungen zur Durchführung des Verfahrens nach einem der Ansprüche 1 bis 2, wenn diese Anweisungen von einem Prozessor ausgeführt werden.

7. Vorrichtung (6) zum Schutz gegen Eindringen in einen Fahrzeugdatenbus, wobei die Vorrichtung (6) einen Speicher (61) umfasst, der mit mindestens einem Prozessor (60) verbunden ist, der zur Durchführung der Schritte des Verfahrens nach einem der Ansprüche 1 bis 2 konfiguriert ist.

8. System mit der Vorrichtung (6) nach Anspruch 7 und mindestens einem Rechner (11 bis 13), der über einen Datenbus (100) mit der Vorrichtung verbunden ist, wobei das System zur Durchführung der Schritte des Verfahrens nach einem der Ansprüche 1 bis 5 konfiguriert ist.

9. Fahrzeug mit der Vorrichtung (6) nach Anspruch 7 oder dem System nach Anspruch 8.

## Claims

1. Method for protecting against an intrusion on a data bus (100) of a vehicle, said method comprising a step of detecting (71) an intrusion of a first message transmitted on said data bus (100), said first message belonging to a set of messages transmitted on said data bus (100), each of these messages comprising an identification, said intrusion being detected as a function of a value of a counter associated with said first message and as a function of determined rules for incrementing said counter for each transmission of a message of said set of messages on said data bus (100);

   wherein said method further comprises a step of transmission (72), on said data bus (100), of a request for screening of said first message in order to deactivate a receipt of messages bearing the identification of said first message, said screening being said first message included in a message, called periodical, belonging to a set of messages transmitted periodically on said data bus (100),
   said periodically request comprising a first value (42) representative of the screening (40) of said first message and a second value representative of the identification (40) of said first message, said first value (42) being obtained by a identification of said product (40) by a first determined matrix (41) and said second value being obtained by a identification of said product (40) by a second determined matrix, said second matrix being different from said first matrix (41).

2. Method according to claim 1, further comprising a step of storage of said identification in a « first in, first out » type memory, called a FIFO memory (20), configured to store a determined quantity of identifications, a message {circumflex over (Y)} being transmitted for each identification stored in said FIFO memory (20), said periodic messages being transmitted sequentially according to an order of storage of the associated periodically in said FIFO memory (20).

3. Method according to claim 1 or 2, wherein a consignee computer (11 to 13) of said screening request comprises in memory a third matrix (51) inverse of said first matrix (41) and a fourth matrix inverse of said second matrix, said first matrix (41) comprising at least one value not present in said third matrix (51) and/or said second matrix comprising at least one value not present in said fourth matrix.

4. Method according to claim 3, for which a third value (52) is obtained by a product of said first value (42) by said third matrix (51) and a fourth value is obtained by a product of said second value by said fourth value, said computer consignee of said request executing the screening of said first message when said third value is equal to said fourth value.

5. Method according to claim 4, wherein said screening of said first message by said computer (11 to 13) causes said computer (11 to 13) to operate in degraded mode relative to at least one function associated with said first message.

6. Computer plan comprising instructions for implementing the method according to any one of claims 1 to 2, when these instructions are executed by a processor.

7. Device (6) for protecting against an intrusion on a data bus of a vehicle, said device (6) comprising a memory (61) associated with at least one processor (60) configured for implementing the steps of the method according to any one of claims 1 to 2.

8. System comprising the device (6) according to claim 7 and at least one computer (11 to 13) connected to said device via a data bus (100), said system being configured for implementing the steps of the method according to any one of claims 1 to 5.

9. Vehicle comprising the device (6) according to claim 7 or the system according to claim 8.

[Fig. 1]

[Fig. 2]

[Fig. 3]

[Fig. 4]

EP 4 335 079 B1

[Fig. 5]

[Fig. 6]

15

[Fig. 7]

71

72

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2104785
- FR 3102269 A1
- EP 3726796 A1
- US 2014346284 A1
- FR 1911601
- FR 1911602